# EUROPÄISCHE PATENTSCHRIFT

(11) **EP 2 386 451 B1**
(45) Veröffentlichungstag und Bekanntmachung des Hinweises auf die Patenterteilung: **27.01.2016**
(21) Anmeldenummer: 11003958.3
(22) Anmeldetag: 13.05.2011
(51) Int. Cl.: B60T 8/24, B60T 17/18, B60T 17/22, B60W 10/10, B60W 40/06, B60W 40/10, B60W 10/18, B60W 30/18, B60W 10/04, B60W 30/00

(54) **Kraftfahrzeug mit Bremsüberwachung und Betriebsverfahren**
Motor vehicle with brake monitoring and method for operating same
Véhicule automobile doté d'une surveillance de freinage et procédé de fonctionnement

(30) Priorität: 14.05.2010 DE 102010020495
(43) Veröffentlichungstag der Anmeldung: 16.11.2011
(73) Patentinhaber: Audi AG, 85045 Ingolstadt (DE)
(72) Erfinder: Förster, Kilian, 92339 Beilngries (DE)
(74) Vertreter: Patzelt, Heike Anna Maria

(56) Entgegenhaltungen:
- WO-A1-2006/042628
- DE-A1- 19 545 010
- DE-A1- 19 752 345
- DE-A1- 19 835 937
- DE-A1-102005 041 071
- DE-A1-102007 025 926
- DE-A1-102008 000 749
- DE-A1-102008 043 560

## Beschreibung

Die vorliegende Erfindung betrifft ein Kraftfahrzeug mit einer Bremsvorrichtung und einer Bremsüberwachungseinrichtung zum Ausgeben eines Notsignals, wenn die Bremsvorrichtung einen vorgegeben kritischen Zustand erreicht. Darüber hinaus betrifft die vorliegende Erfindung ein entsprechendes Verfahren zum Betreiben eines Kraftfahrzeugs.

Bei längeren Bergabfahrten, z. B. Passabfahrten, kuppeln Nutzer von Fahrzeugen mit Schaltgetriebe häufig den Motor aus, um das Fahrzeug bergabrollen zu lassen. Um die Geschwindigkeit des Fahrzeugs unter Kontrolle zu halten, setzt der Fahrer dann ausschließlich die Bremse ein. Bei langer Dauer der Bergabfahrt erreicht die Bremsanlage so unter Umständen sehr hohe Temperaturen. Dies hat einige negative Folgen für das Bremssystem:
- Zum einen führen extreme Scheiben/Belagtemperaturen zum Reibwertabfall, was auch "Fading" genannt wird. Der Fahrer muss dann stärker als gewohnt auf das Bremspedal treten, um die gewünschte Verzögerung zu erreichen. Der Bremsweg im Falle einer Notfallbremsung nimmt unweigerlich zu.
- Zum anderen führen lang anhaltende hohe Scheibentemperaturen zu hohen Temperaturen in der Bremsflüssigkeit des Sattels. Übersteigt die Flüssigkeitstemperatur den Siedepunkt der Bremsflüssigkeit, geht die Bremsflüssigkeit beim Lösen der Bremse schlagartig in den gasförmigen Zustand über. Bei erneuter Betätigung der Bremse wird dieses Gas komprimiert, ohne nennenswerten Druck im System aufzubauen. Entsprechend niedrig ist das Bremsmoment und das Fahrzeug verzögert nicht. Eine Warnung des Fahrers (z. B. akustisch, optisch) vor Erreichen des kritischen Zustands erfolgt weder im Fading-Fall noch im Fall der Überschreitung der Siedepunkttemperatur.

Es besteht also das Problem, dass bei einer plötzlichen Bremsung der Fahrer durch das Nachlassen der Bremswirkung bzw. den Totalausfall des Bremssystems überrascht wird. Dies kostet im Zweifelsfall wertvolle Sekunden bzw. macht ein Verzögern des Fahrzeugs unmöglich. Letzten Endes kann dies zu schweren Unfällen führen.

Aus der Druckschrift DE 102 19 039 A1 ist ein Verfahren und eine Anordnung zur Überwachung von Fahrzeugbremsen elektronisch geregelter Bremssysteme von Fahrzeugen auf Überlast bekannt. Dabei werden die Temperaturen der Radbremsen der Räder des Fahrzeugs ermittelt und mit einem vorbestimmten Temperaturgrenzwert verglichen. Ein erstes Fahrer-Warnsignal "Warnstufe 1" wird ausgegeben, wenn die Temperatur der Radbremsen an einer Achse des Fahrzeugs den Temperaturgrenzwert überschreitet. Ein zweites Fahrer-Warnsignal ("Warnstufe 2") wird ausgegeben, wenn die ermittelten Temperaturen der Radbremsen an mehr als einer Achse des Fahrzeugs den Temperaturgrenzwert überschreiten.

Darüber hinaus beschreibt die Patentschrift DE 39 40 456 C2 ein Verfahren zur Warnung vor und zur Vermeidung einer Überlastung der Bremsen eines Kraftfahrzeugs mit Sensoren zur Erfassung der Augenblickstemperatur eines Bremsbauelements. Es wird eine mittlere Temperatur errechnet und diese mit dem laufend ermittelten Gradienten des gemittelten Temperaturverlaufs nach einer bestimmten Folge von Bremsungen und innerhalb definierter Zeitzyklen logisch verknüpft und zur Aufarbeitung eines Warnsignals einem Grenzwertvergleich unterworfen. Gegebenenfalls wird bei Überschreiten eines Grenzwerts eine automatische Getriebeschaltung so beeinflusst, dass die Blockierung der Auswahl eines höheren Gangs oder eine Gangwahl im Sinne einer Drehzahlerhöhung der Brennkraftmaschine bewirkt wird.

Die Druckschrift DE 43 29 918 A1 offenbart ein Sicherheitssystem bei Kraftfahrzeugen mit Automatikgetriebe. Es ist ein aufgrund bestimmter Schaltkriterien automatisch seine Übersetzungen änderndes Automatikgetriebesystem vorgesehen. Abhängig von einer sicherheitskritischen Zustandserkennung des zum Fahrzeug gehörenden Bremssystems wird ein sicherheitsrelevantes Signal erzeugt. Zur Erzeugung des sicherheitsrelevanten Signals wird die Temperatur wenigstens eines Bremssystems herangezogen. Abhängig von diesem sicherheitsrelevanten Signal werden die Schaltkriterien für das Automatikgetriebe verändert.

Auch die Druckschriften DE 10 2005 004 576 A1 und DE 42 12 388 A1 betreffen Bremsanlagen für Kraftfahrzeuge mit Sicherheitsfunktion auf der Basis einer Temperaturüberwachung bzw. einen Überhitzungsdetektor für eine Scheibenbremse.

Wesentliches Ziel der Techniken in den oben genannten Druckschriften ist es, eine Überhitzung der Bremsbeläge - Bremsscheiben-Kombination und den damit verbundenen Fading-Fall zu vermeiden. Es wird erst dann eingegriffen, wenn die Temperaturen bereits grenzwertig sind.

Die DE 197 52 345 A1 beschreibt eine Vorrichtung zur Begrenzung der Betriebstemperatur von Kraftfahrzeugbremsen. Hierbei wird eine Fahrweise ermittelt, und in Abhängigkeit von der ermittelten Fahrweise werden bei überhitzten Bremsen unterschiedliche Maßnahmen ergriffen. Wird aufgrund einer niedrigen Fahrgeschwindigkeit und intensiver Bremsbetätigung eine Bergabfahrt ermittelt, wird nach einem anschließenden Abstellen eines Motors des Fahrzeugs ein Wiederanlassen des Motors verhindert. Bei der Bergabfahrt kann sich das Getriebe im Leerlauf befinden.

Die DE 10 2007 025 926 A1 beschreibt ein Verfahren zum Beeinflussen des Betriebsmanagements eines Kraftfahrzeugs, bei welchem ein reduziertes Maximalantriebsmoment vorgegeben wird, wenn die aktuelle Bremsentemperatur eine vorgegebene Grenztemperatur überschreitet. Beim Reduzieren des Maximalantriebsmoments wird die Fahrbahnlängsneigung berücksichtigt, sodass bei einer Fahrt auf einer Fahrbahn mit Gefälle ein besonders stark reduziertes Maximalantriebsmoment vorgegeben wird. Zusätzlich kann berücksichtigt werden, welche Gangstufe eingelegt ist.

Die DE 198 35 937 A1 beschreibt ein Verfahren zur Regelung der Abstiegsgeschwindigkeit eines Geländefahrzeugs. Hierbei wird die Fahrzeuggeschwindigkeit mittels einer Elektronik und einer Bremsanlage mit aktivem Bremseneingriff auf eine konstante Abstiegsgeschwindigkeit. Des Weiteren ist eine Leerlauferkennung vorgesehen. Wenn das Geländefahrzeug eine Strecke mit steilem Gefälle herabfährt und die Bremswirkung des Motors aufgrund des Leerlaufs nicht mehr zur Verfügung steht, sind die Bremsen schnell überlastet bzw. erhitzt. Für diesen unerwünschten Betriebszustand ist eine Warnung für den Fahrer mittels einer Warnleuchte oder einem akustischen Signalgeber vorgesehen.

Die Aufgabe der vorliegenden Erfindung besteht somit darin, den kritischen Zustand einer Überhitzung eines Bremssystems besser vorherzusehen, um früher entsprechende Gegenmaßnahmen ergreifen zu können.

Erfindungsgemäß wird diese Aufgabe gelöst durch ein Kraftfahrzeug mit
- einer Bremsvorrichtung und
- einer Steuereinrichtung zum Ausgeben eines spezifischen Steuersignals in Abhängigkeit von einem Signal der Bremsvorrichtung, wenn sich die Bremsvorrichtung in einem vorgegebenen kritischen Zustand befindet, weiterhin umfassend
- ein Getriebe,
- eine Getriebesteuereinrichtung zum Ausgeben eines Leerlaufsignals, wenn das Getriebe in den Leerlauf geschaltet ist, und
- eine Sensoreinrichtung zum Ausgeben einer Gefälleinformation, wenn sich das Kraftfahrzeug an einem Gefälle befindet, wobei
- das Ausgeben des spezifischen Steuersignals durch die Steuereinrichtung auch in Abhängigkeit von dem Leerlaufsignal und der Gefälleinformation erfolgt, wobei die Steuereinrichtung mit dem Getriebe derart zusammenwirkt, dass automatisch ein Gang in das Getriebe eingelegt wird, wenn die Steuereinrichtung (das Steuersignal ausgibt.

Darüber hinaus wird erfindungsgemäß bereitgestellt ein Verfahren zum Betreiben eines Kraftfahrzeugs durch
- Ausgeben eines spezifischen Steuersignals in Abhängigkeit von einem Signal einer Bremsvorrichtung des Kraftfahrzeugs, wenn sich die Bremsvorrichtung in einem vorgegebenen kritischen Zustand befindet,
- Ausgeben eines Leerlaufsignals, wenn ein Getriebe des Kraftfahrzeugs in den Leerlauf geschaltet ist, und
- Ausgeben einer Gefälleinformation, wenn sich das Kraftfahrzeug an einem Gefälle befindet, wobei
- das Ausgeben des spezifischen Steuersignals auch in Abhängigkeit von dem Leerlaufsignal und der Gefälleinformation erfolgt, und wobei eine Steuereinrichtung mit dem Getriebe derart zusammenwirkt, dass automatisch ein Gang in das Getriebe eingelegt wird, wenn die Steuereinrichtung (das Steuersignal ausgibt.

In vorteilhafter Weise wird bei dem erfindungsgemäßen Kraftfahrzeug bzw. dem erfindungsgemäßen Verfahren die Information genutzt, dass das Schaltgetriebe im Leerlauf betrieben wird, wobei also der Motor des Kraftfahrzeugs von dem übrigen Antriebsstrang abgekoppelt ist. Dies bedeutet, dass der Motor keine Bremsleistung aufbringen kann, so dass auf das Bremssystem eine entsprechend höhere Anforderung gestellt wird. Weiterhin wird die Information ausgenutzt, dass das Fahrzeug bergab fährt. Auch dies deutet daraufhin, dass das Bremssystems bzw. die Bremsvorrichtung in Bälde entsprechende Bremsleistung erbringen muss. Zusätzlich wird noch die Bremsvorrichtung selbst überwacht und gegebenenfalls ein entsprechendes Signal ausgegeben. Alle diese Informationen in Kombination, nämlich die Bremszustandsinformation, die Leerlaufinformation und die Bergabfahrtinformation werden zusammen genutzt, um ein entsprechendes Steuersignal zu generieren, welches im Kraftfahrzeug für die Unterstützung des Fahrers verwendet werden kann.

Erfindungsgemäß wirkt die Steuereinrichtung mit dem Getriebe derart zusammen, dass automatisch ein Gang in das Getriebe eingelegt wird, wenn die Steuereinrichtung das Steuersignal ausgibt. Damit erhält der Fahrer dahingehend Unterstützung, dass er das Fahrzeug sicherer führt, wenn er sich der Tatsache nicht bewusst ist, dass der Motor hilfreiche Bremsleistung beisteuern kann.

Vorzugsweise besitzt das Kraftfahrzeug eine Warneinrichtung zum optischen und/oder akustischen Warnen des Fahrers des Kraftfahrzeugs, wenn das Steuersignal ausgegeben wird. So kann der Fahrer beispielsweise bereits zu Beginn einer Bergabfahrt, wenn er ausgekuppelt hat, und beispielsweise ständig bremst rechtzeitig gewarnt werden, dass bei Fortdauer dieser Situation unter Umständen eine kritische Situation für das Bremssystems des Kraftfahrzeugs erreicht wird. Der Fahrer kann dann seine Fahrweise umstellen und wird nicht durch einen plötzlichen Ausfall des Bremssystems überrascht.

In einer speziellen Ausführungsform ist das Signal der Bremsvorrichtung ein Temperaturmesssignal eines Temperatursensors der Bremsvorrichtung, und der kritische Zustand betrifft eine von dem Temperatursensor gemessene Temperatur einer Komponente der Bremsvorrichtung. Es wird damit auf eine tatsächliche Temperatur einer Komponente der Bremsvorrichtung zurückgegriffen, wodurch der tatsächliche Zustand der Bremsvorrichtung für die Steuerung bzw. Warnung des Fahrers berücksichtigt werden kann.

Gemäß einer anderen Ausführungsform kann das Signal der Bremsvorrichtung auch ein Betätigungssignal eines Bremspedals der Bremsvorrichtung sein. Dabei kann beispielsweise der kritische Zustand der Bremsvorrichtung eine Dauer einer Betätigung des Bremspedals sein. Damit kann allein aufgrund der Dauer der Betätigung des Bremspedals eine Warnung an den Fahrer abgegeben werden. Alternativ lässt sich die Dauer der Betätigung des Bremspedals mit Hilfe eines Temperaturmodells auch in eine entsprechende Temperatur umrechnen, sodass die Warnung bzw. das von der Steuereinrichtung abgegebene Steuersignal dann eine geschätzte Temperatur der Bremsvorrichtung betrifft. Ein derartiges Temperaturmodell ist leichter zu implementieren als ein zusätzlicher Temperatursensor an der Bremsvorrichtung. Der kritische Zustand der Bremsvorrichtung kann aber auch das Verhältnis Vordruck der Bremsvorrichtung zu Verzögerung des Kraftfahrzeugs betreffen. Dies bedeutet, dass der kritische Zustand durch einen oder mehrere Parameter definiert sein kann. Je mehr Parameter betroffen sind, desto genauer wird der kritische Zustand beschrieben. Der kritische Zustand wird natürlich in erster Linie durch die Temperatur einer Komponente der Bremsvorrichtung bestimmt. So kann beispielsweise einer ständiger Temperaturanstieg oder ein ständiges Bremsen vorteilhaft für die Prognose eines möglichen Ausfalls der Bremsvorrichtung genutzt werden.

Entsprechend einer weiteren vorteilhaften Weiterbildung der Erfindung umfasst die Sensoreinrichtung einen Neigungssensor. Damit lässt sich die Neigung des Kraftfahrzeugs feststellen und somit indirekt auf eine Bergabfahrt schließen. Ein derartiger Neigungssensor lässt sich einfach beispielsweise nach dem Prinzip einer Wasserwaage realisieren.

Des Weiteren ist es vorteilhaft, wenn das Kraftfahrzeug eine Geschwindigkeitsmesseinrichtung zum Ausgeben eines Überscheitungssignals bei Überschreiten einer vorgegebenen Geschwindigkeit des Kraftfahrzeugs aufweist, wobei die Steuereinrichtung das Steuersignal in Abhängigkeit von dem Überschreitungssignal ausgibt. Es wird somit zusätzlich oder alternativ zu dem Signal der Bremsvorrichtung, das einen Zustand der Bremsvorrichtung wiedergibt, eine Geschwindigkeitsinformation benutzt. Grundsätzlich können aber auch andere Informationen, z. B. die Außentemperatur, herangezogen werden, um ein spezifisches Steuersignal zu generieren, mit dem der Fahrer gewarnt oder unterstützt werden kann.

Die vorliegende Erfindung wird nun anhand den beigefügten Zeichnungen näher erläutert, in denen zeigen:
- Fig. 1: eine schematische Ansicht eines Fahrzeugs, bei dem die Bremstemperatur gemessen wird, und
- Fig. 2: eine schematische Ansicht eines Fahrzeugs gemäß einer zweiten Ausführungsform, bei dem die Temperatur über ein Temperaturmodell ermittelt wird.

Die nachfolgend näher geschilderten Ausführungsbeispiele stellen bevorzugte Ausführungsformen der vorliegenden Erfindung dar.

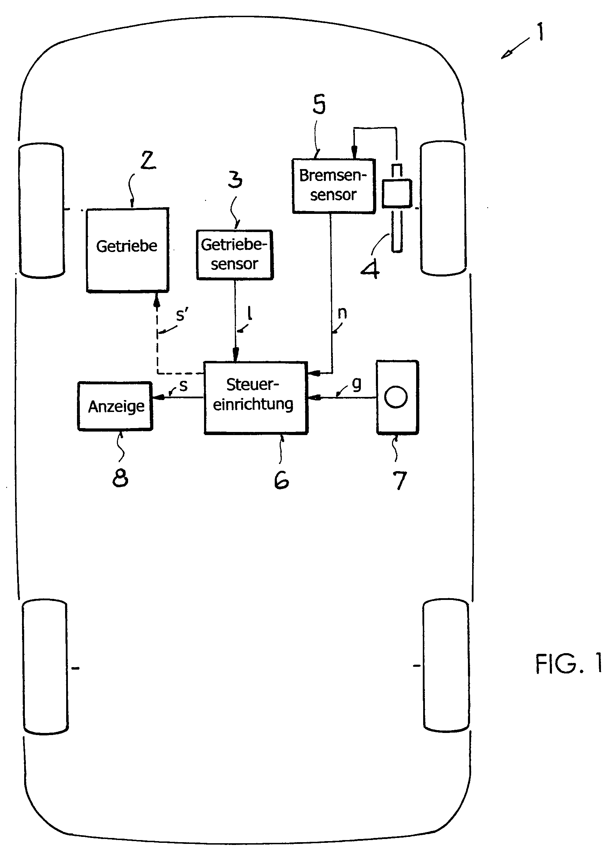

In Fig. 1 ist schematisch ein Kraftfahrzeug 1 in der Draufsicht dargestellt. Es besitzt ein Getriebe 2, welches hier symbolisch ohne Verbindung mit den Rädern dargestellt ist. Auch der Motor des Kraftfahrzeugs ist in der Figur nicht dargestellt. Bei dem Getriebe 2 handelt es sich um ein Schaltgetriebe, bei dem manuell die verschiedenen Gänge eingelegt werden können, oder um ein Automatikgetriebe. Insbesondere kann das Getriebe 2 auch in den Leerlauf geschaltet werden, wodurch der Kraftfluss im Antriebsstrang vom Motor zu den Rädern unterbrochen wird.

Am oder im Getriebe ist ein Getriebesensor 3 vorgesehen, welcher zumindest den Zustand erfasst, wenn das Getriebe 2 in den Leerlauf geschaltet ist. Allgemein handelt es sich bei dem Getriebesensor um eine Getriebesensoreinrichtung, die einen Zustand des Getriebes 2 und insbesondere einen Leerlauf erkennt. Die Getriebesensoreinrichtung gibt dann ein entsprechendes Leerlaufsignal I direkt oder indirekt über ein Getriebesteuergerät (in Fig. 1 nicht dargestellt) aus.

Weiterhin besitzt das Kraftfahrzeug im vorliegenden Beispiel eine Bremsvorrichtung 4. Sie ist in Fig. 1 symbolisch durch eine Bremsscheibe und einen Bremssattel dargestellt. Die Bremsvorrichtung besitzt stets einen aktuellen Zustand, der durch einen oder mehrer Parameter beschrieben werden kann. Zur Erfassung dieses Zustands der Bremsvorrichtung 4 ist gemäß dem vorliegenden Ausführungsbeispiel in dem Kraftfahrzeug 1 ein Bremsensensor bzw. eine Bremsüberwachungseinrichtung 5 vorgesehen. Sie erfasst einen oder mehrere physikalische Zustandsgrößen der Bremsvorrichtung 4. Beispielsweise erfasst sie die Temperatur der Bremsscheibe, den Bremsendruck oder die Bremsdauer. In Abhängigkeit von der oder den erfassten Zustandsgrößen gibt die Bremsüberwachungseinrichtung 5 ein Notsignal n aus, wenn sich die Bremsvorrichtung 4 in einem kritischen Zustand befindet. Ein derartiger kritischer Zustand kann, wie bereits erwähnt, eine bestimmte Bremsscheibentemperatur, eine bestimmte Bremsflüssigkeitstemperatur, eine längere Bremsdauer und dergleichen sein. Das von der Bremsüberwachungseinrichtung 5 abgegebene "Notsignal" n kann die einzelnen Zustandsmerkmale wiedergeben oder charakteristisch für den Gesamtzustand sein. Dies bedeutet, dass in der Bremsüberwachungseinrichtung bereits eine Vorverarbeitung der Signale stattfinden kann. Insbesondere können die Signale mehrerer Sensoren miteinander verknüpft und basierend auf dieser Verknüpfung ein entsprechendes "Notsignal" ausgegeben werden.

Bei einer anderen Ausführungsform gibt die Bremsüberwachungseinrichtung 5 nur dann ein Notsignal n aus, wenn ein bestimmter Schwellwert überschritten wird. Der Schwellwert bezieht sich dann beispielsweise auf eine Bremsentemperatur, eine Bremsdauer und dergleichen. Es findet in der Bremsüberwachungseinrichtung 5 dann eine Signalvorverarbeitung bezüglich des Schwellwerts statt. Alternativ, kann von der Bremsüberwachungseinrichtung 5 anstelle des Notsignals fortlaufend ein Zustandssignal ausgegeben werden. Dann wird der Schwellwertvergleich bzw. die weitere Verarbeitung in der nachgeschalteten Steuereinrichtung 6 erfolgen.

Die Steuereinrichtung 6 in dem Kraftfahrzeug 1 nimmt also das Notsignal n der Bremsüberwachungseinrichtung 5 auf. Daneben erhält es auch das Leerlaufsignal I der Getriebesensoreinrichtung 3. Weiterhin erhält es eine Gefälleinformation g von einer in das Kraftfahrzeug integrierten Neigungssensoreinrichtung 7. In einem Ausführungsbeispiel funktioniert der Neigungssensor beispielsweise nach dem Prinzip einer Wasserwaage. Wird eine bestimmte Neigung des Kraftfahrzeugs überschritten, schließt sich beispielsweise ein Kontakt des Neigungssensors, und eine entsprechende Neigungs- oder Gefälleinformation wird an die Steuereinrichtung 6 übertragen.

Aus den drei Eingangssignalen, nämlich dem Notsignal n, dem Leerlaufsignal I und einem Signal mit der Gefälleinformation g erzeugt die Steuereinrichtung 6 ein für die Situation bzw. den Zustand der Bremsvorrichtung 4 spezifisches Steuersignal s. Dieses Steuersignal s wird beispielsweise in einer in das Kraftfahrzeug 1 integrierten Anzeigevorrichtung 8 zur Darstellung eines Warnhinweises für den Fahrer genutzt. Im einfachsten Fall besteht die Anzeigeeinrichtung 8 aus einer Leuchtquelle (z. B. Glühbirne oder LED), die dann bei Ansteuerung leuchtet oder blinkt. Die Anzeigeeinrichtung kann aber auch einen Bildschirm umfassen, mit dem konkrete Warnhinweise gegeben werden. Ein derartiger Warnhinweis kann beispielsweise lauten "Achtung! Bitte Gang einlegen.".

Alternativ oder zusätzlich kann das Steuersignal s der Steuereinrichtung 6 auch zur Erzeugung eines akustischen Warnsignals genutzt werden. Auch hier sind einfache Warntöne oder komplexere Sprachausgaben denkbar.

Es wird das gleiche Steuersignal s oder ein zusätzliches Steuersignal s' von der Steuereinrichtung 6 dazu genutzt, das Getriebe 2 automatisch anzusteuern. Damit wird automatisch im Getriebe 2 ein Gang eingelegt, wenn eine kritische Situation auf der Basis des Leerlaufsignals I, des Notsignals n und der Gefälleinformation g erkannt wird. Der Fahrer wird dann bei seiner Entscheidung unterstützt, welchen Gang er im Fahrzeug einlegen soll. Es besteht so praktisch eine Zwangskopplung zwischen der Gangwahl und den Auslösekriterien der Warnung bzw. Empfehlung. Das Fahrzeug wird in diesem Fall somit selbständig den Motor zur Bremsunterstützung heranziehen.

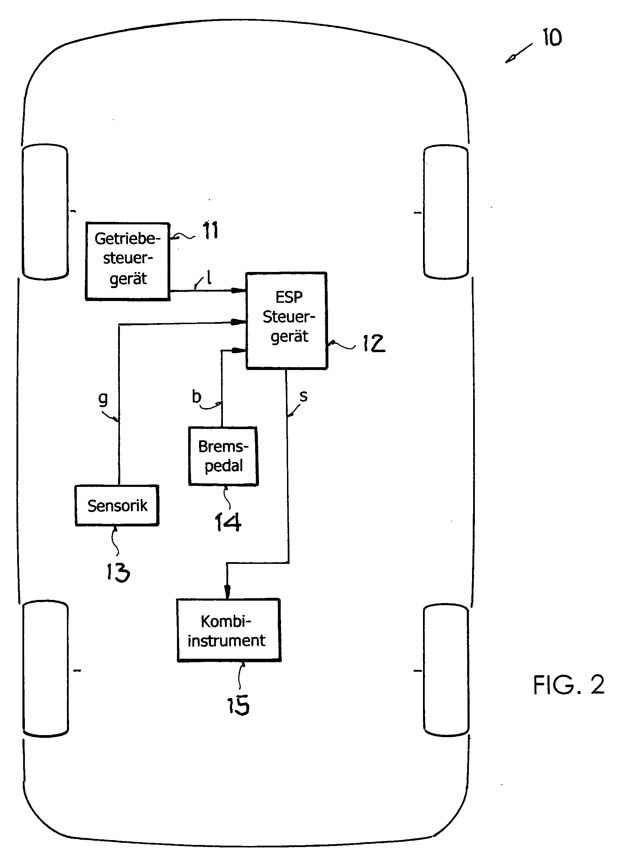

In Fig. 2 ist ein weiteres Ausführungsbeispiel eines erfindungsgemäßen Kraftfahrzeugs schematisch dargestellt. Dieses Fahrzeug besitzt ein Getriebesteuergerät 11. Das dazugehörige Getriebe (Schalt- oder Automatikgetriebe) ist der Übersicht halber hier nicht dargestellt. Das Getriebesteuergerät 11 liefert ein Leerlaufsignal I an ein ESP-Steuergerät (elektronisches Stabilitätsprogramm) 12. Das Leerlaufsignal I enthält die Information, ob das Getriebe in den Leerlauf geschaltet ist, oder nicht.

Weiterhin ist in dem Kraftfahrzeug 11 eine Sensorik 13, z. B. ein Sensorcluster vorgesehen. Diese Sensorik 13 liefert ein Signal mit einer entsprechenden Gefälleinformation g an das ESP-Steuergerät 12.

Ferner besitzt das Kraftfahrzeug 10 ein Bremspedal 14 als Teil der Bremsvorrichtung. Dieses Bremspedal enthält einen entsprechenden Sensor, der ein Betätigungssignal b ausgibt, welches die Information trägt, ob das Bremspedal 14 betätigt wird oder nicht.

Das ESP-Steuergerät 12 errechnet anhand der Eingangssignale bzw. Eingangsdaten I, g und b, ob ein kritischer Zustand der Bremse erreicht ist. Dazu nutzt es entweder ein integriertes Temperaturmodell, mit dem aus dem Betätigungssignal b eine Temperatur der Bremsvorrichtung geschätzt werden kann. Alternativ misst das ESP-Steuergerät 12 lediglich die Betätigungszeit des Bremspedals 14 und ermittelt mit einem geeigneten Modell anhand der Betätigungsdauer, der Gefälleinformation und der Leerlaufinformation ein entsprechendes Steuersignal s.

Das Steuersignal wird beispielsweise an ein Kombiinstrument 15 des Fahrzeugs 10 oder eine andere MMI übertragen. Das Kombiinstrument 15 bzw. die MMI sorgen für eine entsprechende Warnanzeige. Der Fahrer wird also auch hier beispielsweise aufgefordert, einzukuppeln bzw. einen Gang einzulegen, wenn eine Bergfahrt erkannt wird, eine Überschreitung einer Bremstemperatur oder Bremsdauer festgestellt wird und ein Getriebeleerlauf vorliegt.

Mithilfe der Erfindung wird der Fahrer im Falle einer reinen Warnung dazu animiert, einen Gang einzulegen. Entweder er folgt der Aufforderung oder das Fahrzeug legt selbständig einen Gang ein und der Motor unterstützt die Bremse bei der Verzögerung des Fahrzeugs. Die Bremse kann wieder abkühlen und die Gefahr eines Bremsversagens wird vermieden. Sollte der Fahrer der Empfehlung/Warnung nicht folgen, ist er zumindest gewarnt und reagiert somit schneller bei Fehlfunktionen der Bremse.

Die oben dargestellten Beispiele sind rein exemplarisch zu sehen. Generell wird entsprechend der vorliegenden Erfindung z. B. bei Überschreiten eines kritischen Brems- und Betriebszustands, wenn sich das Getriebe im Leerlauf befindet und das Fahrzeug bergab fährt, ein spezifisches Steuersignal ausgegeben und der Fahrer wird darauf basierend gewarnt bzw. aufgefordert einen Gang einzulegen (was andernfalls automatisch geschieht). Ein kritischer Zustand der Bremsvorrichtung kann leicht erkannt werden, denn moderne Fahrzeuge kennen den Zustand ihrer Bremse/Bremsen sehr gut. Die Fahrzeugelektronik sammelt nämlich in der Regel Informationen bezüglich Bremsscheibentemperatur, Neigung des Fahrzeugs, Zustand des Getriebes (Leerlauf ja/nein), Bremsdruck, Dauer der Bremsung usw. Anhand dieser Daten lässt sich der Zustand der Bremse bestimmen. Die Berechnung des Zustands erfolgt in einem geeigneten Steuergerät. Es ist beispielsweise eine Integration der Logik z. B. in das ESP-Steuergerät denkbar.

Das Auslösen der Empfehlung/Warnung erfolgt im Allgemeinen erst, wenn ein oder mehrere sinnvolle, gewählte Kriterien erfüllt sind. Zu diesen Kriterien zählen: Fahrer bremst, Fahrzeug fährt bergab, kein Gang ist eingelegt, Temperaturmodell überschreitet Grenztemperatur, Verhältnis Vordruck/Verzögerung überschreitet Grenzwert und Geschwindigkeit ist über Grenzwert.

Auf diese Weise kann bei Bergabfahrten der Leerlauf des Motors und eine unter Umständen daraus resultierende Überhitzung der Bremsbeläge/Scheibenkombination vermieden werden. Dadurch wiederum wird der so genannte "Fading-Fall" vermieden und es wird nicht erst dann eingegriffen, wenn die Bremsentemperaturen bereits grenzwertig sind. Vielmehr kann so die Temperatur der Bremsflüssigkeit besser im Auge behalten und das "Ausgasen" bzw. "Kochen" der Bremsflüssigkeit verhindert werden.

## Patentansprüche

1. Kraftfahrzeug (1, 10) mit
- einer Bremsvorrichtung (4, 14)
- einer Steuereinrichtung (6, 12) zum Ausgeben eines spezifischen Steuersignals (s, s') in Abhängigkeit von einem Signal (n, b) der Bremsvorrichtung (4, 14), wenn sich die Bremsvorrichtung (4, 14) in einem vorgegebenen kritischen Zustand befindet,
- einem Getriebe (2), und
- einer Getriebesteuereinrichtung (3, 11) zum Ausgeben eines Leerlaufsignals (I), wenn das Getriebe (2) in den Leerlauf geschaltet ist,
**gekennzeichnet durch**
- eine Sensoreinrichtung (7, 13) zum Ausgeben einer Gefälleinformation (g), wenn sich das Kraftfahrzeug (1, 10) an einem Gefälle befindet, wobei
- das Ausgeben des spezifischen Steuersignals (s, s') **durch** die Steuereinrichtung (6, 12) auch in Abhängigkeit von dem Leerlaufsignal (I) und der Gefälleinformation (g) erfolgt, wobei die Steuereinrichtung (6, 12) mit dem Getriebe (2) derart zusammenwirkt, dass automatisch ein Gang in das Getriebe (2) eingelegt wird, wenn die Steuereinrichtung (6, 12) das Steuersignal (s, s') ausgibt.

2. Kraftfahrzeug nach Anspruch 1, das eine Warneinrichtung (8, 15) zum optischen und/oder akustischen Warnen des Fahrers des Kraftfahrzeugs, wenn das Steuersignal (s, s') ausgegeben wird, aufweist.

3. Kraftfahrzeug nach einem der vorhergehenden Ansprüche, wobei das Signal (n, b) der Bremsvorrichtung (4, 14) ein Temperaturmesssignal eines Temperatursensors der Bremsvorrichtung ist, und der kritische Zustand eine von dem Temperatursensor gemessene Temperatur einer Komponente der Bremsvorrichtung betrifft.

4. Kraftfahrzeug nach Anspruch 1 oder 2, wobei das Signal (4, 14) der Bremsvorrichtung ein Betätigungssignal eines Bremspedals der Bremsvorrichtung ist.

5. Kraftfahrzeug nach Anspruch 4, wobei der kritische Zustand eine Dauer einer Betätigung des Bremspedals betrifft.

6. Kraftfahrzeug nach Anspruch 5, wobei der kritische Zustand eine von der Steuereinrichtung (6, 12) aus der Dauer der Betätigung des Bremspedals ermittelte Temperatur betrifft.

7. Kraftfahrzeug nach einem der vorhergehenden Ansprüche, wobei der kritische Zustand das Verhältnis Vordruck der Bremsvorrichtung (4, 14) zu Verzögerung des Kraftfahrzeugs (1, 10) betrifft.

8. Kraftfahrzeug nach einem der vorhergehenden Ansprüche, das eine Geschwindigkeitsmesseinrichtung zum Ausgeben eines Überschreitungssignals bei Überschreiten einer vorgegebenen Geschwindigkeit des Kraftfahrzeugs (1, 10) aufweist, wobei die Steuereinrichtung (6) das Steuersignal (s, s') in Abhängigkeit von dem Überschreitungssignal ausgibt.

9. Verfahren zum Betreiben eines Kraftfahrzeugs (1, 10) durch
- Ausgeben eines spezifischen Steuersignals (s, s') in Abhängigkeit von einem Signal (n, b) einer Bremsvorrichtung (4, 14) des Kraftfahrzeugs (1, 10), wenn sich die Bremsvorrichtung (4, 14) in einem vorgegebenen kritischen Zustand befindet,
- Ausgeben eines Leerlaufsignals (I), wenn ein Getriebe (2) des Kraftfahrzeugs in den Leerlauf geschaltet ist, und
**gekennzeichnet durch**
- Ausgeben einer Gefälleinformation (g), wenn sich das Kraftfahrzeug an einem Gefälle befindet, wobei
- das Ausgeben des spezifischen Steuersignals (s, s') auch in Abhängigkeit von dem Leerlaufsignal (I) und der Gefälleinformation (g) erfolgt, wobei eine Steuereinrichtung (6, 12) mit dem Getriebe (2) derart zusammenwirkt, dass automatisch ein Gang in das Getriebe (2) eingelegt wird, wenn die Steuereinrichtung (6, 12) das Steuersignal (s, s') ausgibt.

## Claims

1. Motor vehicle (1, 10) comprising
- a braking device (4, 14),
- a controller (6, 12) for outputting a specific control signal (s, s') depending on a signal (n, b) from the braking device (4, 14) if the braking device (4, 14) is in a predetermined critical state,
- a gearbox (2), and
- a gearbox controller (3, 11) for outputting a neutral signal (I) if the gearbox (2) is in neutral, **characterised by**
- a sensor apparatus (7, 13) for outputting a piece of gradient information (g) if the motor vehicle (1, 10) is on a downhill slope,
- the controller (6, 12) also outputting the specific control signal (s, s') on the basis of the neutral signal (I) and the gradient information (g), the controller (6, 12) interacting with the gearbox (2) in such a way that a gear is automatically engaged in the gearbox (2) when the controller (6, 12) outputs the control signal (s, s').

2. Motor vehicle according to claim 1, comprising a warning apparatus (8, 15) for optically and/or acoustically warning the driver of the motor vehicle when the control signal (s, s') is output.

3. Motor vehicle according to either of the preceding claims, wherein the signal (n, b) from the braking device (4, 14) is a temperature measurement signal from a temperature sensor of the braking device, and the critical state relates to a temperature of a component of the braking device as measured by the temperature sensor.

4. Motor vehicle according to either claim 1 or claim 2, wherein the signal (4, 14) from the braking device is an actuation signal from a brake pedal of the braking device.

5. Motor vehicle according to claim 4, wherein the critical state relates to a duration of an actuation of the brake pedal.

6. Motor vehicle according to claim 5, wherein the critical state relates to a temperature which the controller (6, 12) determines from the duration of the actuation of the brake pedal.

7. Motor vehicle according to any of the preceding claims, wherein the critical state relates to the ratio between the supply pressure of the braking device (4, 14) and the deceleration of the motor vehicle (1, 10).

8. Motor vehicle according to any of the preceding claims, comprising a speed measurement apparatus for outputting a speeding signal when a predetermined speed of the motor vehicle (1, 10) is exceeded, wherein the controller (6) outputs the control signal (s, s') on the basis of the speeding signal.

9. Method for operating a motor vehicle (1, 10), by
- outputting a specific control signal (s, s') on the basis of a signal (n, b) from a braking device (4, 14) of the motor vehicle (1, 10) if the braking device (4, 14) in is a predetermined critical state,
- outputting a neutral signal (I) if a gearbox (2) of the motor vehicle is in neutral, and
**characterised by**
- outputting a piece of gradient information (g) if the motor vehicle is on a downhill slope,
- the specific control signal (s, s') also being output on the basis of the neutral signal (I) and the gradient information (g), a controller (6, 12) interacting with the gearbox (2) in such a way that a gear is automatically engaged in the gearbox (2) when the controller (6, 12) outputs the control signal (s, s').

## Revendications

1. Véhicule automobile (1, 10) comprenant :
- un dispositif de freinage (4, 14),
- un dispositif de commande (6,12) pour délivrer un signal de commande spécifique (s, s') en fonction d'un signal (n, b) du dispositif de freinage (4, 14) lorsque le dispositif de freinage (4, 14) se trouve dans un état critique prédéterminé,
- une boîte de vitesses (2) et
- un dispositif de commande de boîte de vitesses (3, 11) pour délivrer un signal de ralenti (I) lorsque la boîte de vitesses (2) est commuté au ralenti,
**caractérisé par** :
- un dispositif capteur (7, 13) pour délivrer des informations de déclivité (g) lorsque le véhicule automobile (1, 10) se trouve dans une déclivité, dans lequel :
- la délivrance du signal de commande spécifique (s, s') par le dispositif de commande (6, 12) se fait également en fonction du signal de ralenti (I) et des informations de déclivité (g), dans lequel le dispositif de commande (6, 12) coopère avec la boîte de vitesses (2) pour faire passer automatiquement une vitesse dans la boîte de vitesses (2) lorsque le dispositif de commande (6, 12) délivre le signal de commande (s, s').

2. Véhicule automobile selon la revendication 1, qui présente un dispositif d'avertissement (8, 15) pour émettre un avertissement optique et/ou acoustique à l'attention du conducteur du véhicule automobile lorsque le signal de commande (s, s') est délivré.

3. Véhicule automobile selon l'une quelconque des revendications précédentes, dans lequel le signal (n, b) du dispositif de freinage (7, 14) est un signal de mesure de température d'un capteur de température du dispositif de freinage et l'état critique concerne une température - mesurée par le capteur de température - d'un composant du dispositif de freinage.

4. Véhicule automobile selon la revendication 1 ou la revendication 2, dans lequel le signal (4, 14) du dispositif de freinage est un signal de commande d'une pédale de frein du dispositif de freinage.

5. Véhicule selon la revendication 4, dans lequel l'état critique concerne une durée d'une commande de la pédale de frein.

6. Véhicule automobile selon la revendication 5, dans lequel l'état critique concerne une température détectée par le dispositif de commande (6, 12) à partir de la durée de la commande de la pédale de frein.

7. Véhicule automobile selon l'une quelconque des revendications précédentes, dans lequel l'état critique concerne le rapport de la pression d'alimentation du dispositif de freinage (4, 14) au retard du véhicule automobile (1, 10).

8. Véhicule automobile selon l'une quelconque des revendications précédentes, qui présente un dispositif de mesure de vitesse pour délivrer un signal de dépassement lors du dépassement d'une vitesse prédéterminée du véhicule automobile (1, 10), dans lequel le dispositif de commande (6) délivre le signal de commande (s, s') en fonction du signal de dépassement.

9. Procédé de fonctionnement d'un véhicule automobile (1, 10) par :
- délivrance d'un signal de commande spécifique (s, s') en fonction d'un signal (n, b) d'un dispositif de freinage (4, 14) du véhicule automobile (1, 10) lorsque le dispositif de freinage (4, 14) se trouve dans un état critique prédéterminé,
- délivrance d'un signal de ralenti (I) lorsqu'une boîte de vitesses (2) du véhicule automobile est commutée au ralenti, et
**caractérisé par** :
- la délivrance d'informations de déclivité (g) lorsque le véhicule automobile se trouve dans une déclivité, dans lequel :
- la délivrance du signal spécifique (s, s') se fait également en fonction du signal de ralenti (I) et des informations de déclivité (g), dans lequel un dispositif de commande (6, 12) coopère avec une boîte de vitesses (I) pour faire passer automatiquement une vitesse dans la boîte de vitesses (2) lorsque le dispositif de commande (6, 12) délivre le signal de commande (s, s').
